Europäisches Patentamt

European Patent Office

Office européen des brevets

(19)

(11) Veröffentlichungsnummer : **0 073 050**
**B1**

(12) # EUROPÄISCHE PATENTSCHRIFT

(45) Veröffentlichungstag der Patentschrift : 21.11.85

(21) Anmeldenummer : 82107691.6

(22) Anmeldetag : 23.08.82

(51) Int. Cl.⁴ : **F 16 L 19/08, F 16 B 7/00**

(54) Klemmverbindung für glatte Rundkörper, insbesondere Rohre und Stangen.

(30) Priorität : 25.08.81 CH 5469/81
26.02.82 CH 1192/82

(43) Veröffentlichungstag der Anmeldung :
02.03.83 Patentblatt 83/09

(45) Bekanntmachung des Hinweises auf die Patenterteilung : 21.11.85 Patentblatt 85/47

(84) Benannte Vertragsstaaten :
AT BE DE FR GB IT NL SE

(56) Entgegenhaltungen :
CH-A- 571 678
DE-A- 3 018 077
DE-A- 3 121 899
FR-A- 2 255 540
FR-A- 2 388 194
FR-A- 2 442 392
US-A- 3 871 691

(73) Patentinhaber : GEORG FISCHER AKTIENGESELL-
SCHAFT
Mühlentalstrasse 105
CH-8201 Schaffhausen (CH)

(72) Erfinder : Hurter, Fritz
Bocksrietstrasse 108
CH-8200 Schaffhausen (CH)

## Beschreibung

Die Erfindung betrifft eine Klemmverbindung für glatte Rundkörper, insbesondere Rohre oder Stangen, gemäss dem Oberbegriff des Anspruches 1.

Bekannt sind Klemmverbindungen der eingangs genannten Art (US-A-3 871 691 bzw. FR-A-2 388 194), bei denen Klemmringe mit kreisförmigem Querschnitt von einer kegelstumpfförmigen Innenfläche eines Schraubkörpers radial nach innen gegen die Rohraussenfläche gepresst werden. Hierbei wird am Rohrumfang eine Nut eingeformt bzw. das Rohr muss eine Nut am Rohrumfang aufweisen, durch die entweder der Rohr-Ringquerschnitt geschwächt oder der innere Durchflussquerschnitt nachteilig verringert wird. Durch die Tiefe der halbkreisförmigen Nute ist ein grosser, sich nachteilig auswirkender, axialer Klemmweg des Schraubkörpers erforderlich.

Im weiteren ist eine Rohrverbindung bekannt geworden (FR-A-2 255 540), bei welcher ein im Querschnitt halbkreisförmiger, radial verformbarer Klemmring am Innenumfang mehrere dreiecksförmige Riefen aufweist. Hierbei können im spitzen Grund der Riefen beim Verspannen des Ringes nachteilige Kerbspannungen auftreten. Da der Klemmring ausser aus Metall auch aus Kunststoff oder einem Elastomermaterial hergestellt sein kann, ist offensichtlich dadurch kein Einhaken des Ringes in der Oberfläche des Rohres gewollt. Ausserdem kann der Klemmring nicht zu stark verspannt werden, da sonst durch die gleichzeitige Verspannung der Dichtung diese beschädigt werden kann.

Ausgehend von dem zuerst genannten Stand der Technik ist es Aufgabe der vorliegenden Erfindung, eine Klemmverbindung der eingangs genannten Art zu schaffen, welche mittels einfach herstellbaren Klemmelementen bei einem kleinen Klemmweg und ohne am zu verbindenden Rundkörper angebrachten Nuten eine auch auf Zug- bzw. Druckbeanspruchung sichere und dauerhafte sowie eine schnell klemm- bzw. lösbare Verbindung des Rundkörpers mit einem Gewinde-Rohrkörper gewährleistet.

Diese Aufgabe ist erfindungsgemäss mit der Lehre gemäss den kennzeichnenden Merkmalen des Anspruches 1 gelöst.

Ausführungsformen dieser Lehre sind in den weiteren, abhängigen Ansprüchen umschrieben.

Die erfindungsgemässe Lösung zeichnet sich durch hohe mechanische Festigkeit aus und ist schnell, einfach und preisgünstig herstellbar. Durch die Herstellung des Greifringes aus Federstahl wird eine genügende Härte der scharfen Kanten erreicht, welche sich beim Verklemmen in der Aussenfläche des Rundkörpers festhaken, so dass eine auf Zug- oder Druckbeanspruchung gut haltende Verbindung erreicht wird. Wenn erforderlich, kann die Verbindung leicht gelöst werden, wobei der gegen seine Federkraft verspannte Klemmring sich durch diese Kraft von der Festhak-Verbindung mit dem Rundkörper wieder lösen kann.

Bei Verwendung von Rohren als Rundkörper kann der Gewinde-Rohrkörper einen sich radial nach innen bis zur Rohrinnenwandung erstreckenden kreisrunden Ansatz aufweisen, welcher als Anschlag beim Einschieben der Rohre dient. Durch die Anordnung einer Dichtung in einer Ausnehmung des Gewinde-Rohrkörpers ist eine mediumsdichte Rohrverbindung gewährleistet, wobei vorzugsweise die Dichtung zur Erhöhung der Dichtwirkung zwei zusammenpressbare Zungen aufweist. Der Schraubkörper zum Verspannen des Greifringes kann als Ueberwurfmutter oder als ein mit einem Aussengewinde versehener Ring ausgebildet sein, wobei dieser vorzugsweise zur Aufnahme eines Steckschlüssels kronenartig ausgebildet sein kann.

Nachfolgend wird ein Ausführungsbeispiel der erfindungsgemässen Klemmverbindung anhand der Zeichnung näher erläutert.

Es zeigen :

Figur 1 einen Längsschnitt durch die eine Hälfte einer Rohr-Klemmverbindung,

Figur 2 einen Ausschnitt II aus Fig. 1, jedoch gemäss einer abgewandelten Ausführungsform und

Figur 3 eine Variante zu Fig. 1.

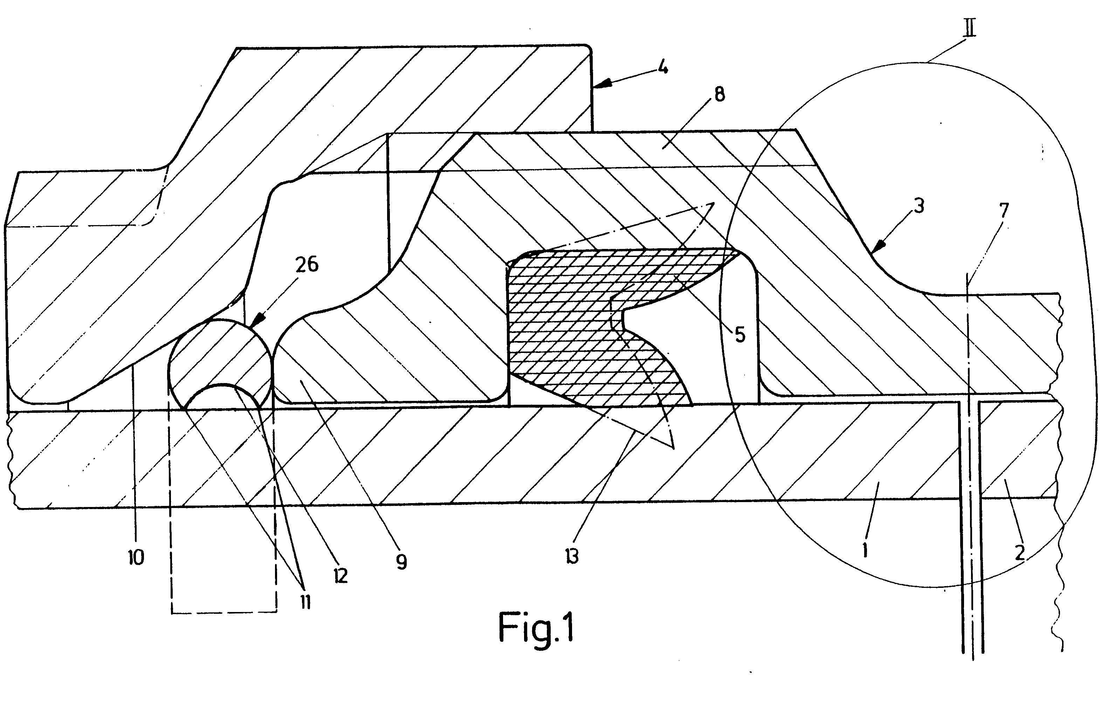

In Fig. 1 sind zwei als Rohre ausgebildete Rundkörper 1, 2 sowie ein Gewinde-Rohrkörper 3, ein Schraubkörper 4, vorzugsweise eine Ueberwurfmutter 4, eine Dichtung 5 und ein Greifring 26 dargestellt. Zum Verbinden des zweiten Rohres 2 ist der Gewinde-Rohrkörper 3 symmetrisch ausgebildet, wobei eine weitere Ueberwurfmutter und ein Greifring im nicht gezeigten Teil der Klemmverbindung vorhanden sind.

Zur Herstellung der Klemmverbindung wird zuerst die Ueberwurfmutter 4 und dann der Greifring 26 auf das erste Rohr 1 aufgeschoben. Anschliessend wird der Gewinde-Rohrkörper 3 auf das Rohr 1 aufgeschoben, bis die ganze Dichtung 5 gegen die Aussenfläche des Rohres 1 anliegt.

Um sicherzustellen, dass der Gewinde-Rohrkörper 3 in der richtigen Länge mindestens bis zur Linie 7 auf das erste Rohr 1 aufgeschoben wird, kann eine Farbmarkierung oder ähnliches zu diesem Zweck auf dem Rohr 1 angeordnet werden.

Der Greifring 26 besteht aus Federstahl und ist so bemessen, dass er gegen die Aussenfläche des Rohres 1 oder 2 formschlüssig anliegt. Der Greifring 26 ist nicht ganz geschlossen sondern weist einen Spalt auf, damit er bei der Zusammendrückung beim Klemmvorgang zusammengepresst werden kann. Dieser Spalt kann aber auch schräg zur Ringebene verlaufen, so dass die beiden Enden des nicht geschlossenen Ringes einander überlappen.

Wenn die Teile 3, 4, 5 und 26 am Rohr 1 angeordnet sind, wird die Ueberwurfmutter mit einem Aussengewinde 8 am Gewinde-Rohrkörper 3 in Eingriff gebracht und angezogen. Dadurch wird der Greifring 26 gegen einen Vorsprung 9 am Gewinde-Rohrkörper 3 gepresst. Gleichzeitig drückt eine kegelstumpfförmige Fläche 10 auf der Innenseite der Ueberwurfmutter 4 den Greifring 26 radial nach innen. Der radiale innere Abschnitt des Greifringes 26 weist zwei scharfe Kanten 11 auf, die sich in der Aussenfläche des Rohres 1 oder 2 festhaken, so dass eine feste Rohrverbindung entsteht, die hohe Mediumsdrücke aushalten kann.

Der Greifring weist einen kreisförmigen Ausgangsquerschnitt auf, wobei auf dessen radialer Innenseite eine kreisbogenförmige Rille 12 angeordnet ist, durch welche die zwei gezeigten Kanten 11 gebildet werden. Die gezeigte Ausführung ist besonders preisgünstig, da ausgehend von einem Draht sich die Rille 12 zwischen den Kanten 11 sehr einfach herstellen lässt.

Die Dichtung 5 kann unter Umständen ganz weggelassen werden, wenn der Greifring 26 entsprechend ausgebildet ist. Im übrigen lässt sich die Dichtung derart zusammenpressen, dass eine absolut druckunabhängige Abdichtung entsteht. Dabei zeigt die gestrichelte Linie 13 die Querschnittsform der Dichtung 5 vor dem Einschieben des Rohres 1.

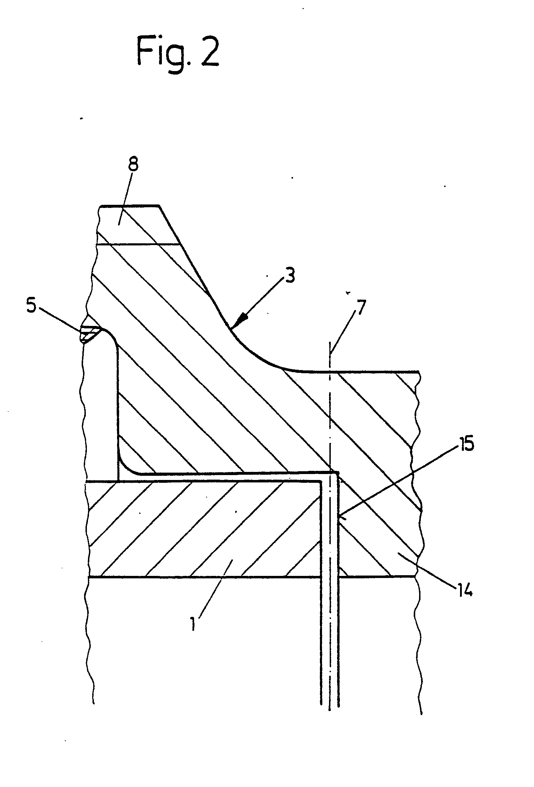

In Fig. 2 ist eine leicht abgeänderte Ausführung der Klemmverbindung dargestellt. Bei dieser Ausführung ist der Gewinde-Rohrkörper 3 radial innen mit einem kreisrunden Ansatz 14 versehen, dessen Innenradius demjenigen des Rohres 1, 2 entspricht. Dabei kann die kreisrunde Fläche 15 gegen die Stirnfläche des Rohres 1, 2 anliegen. Dieser Ansatz 14 dient unter anderem zur richtigen Positionierung des Gewinde-Rohrkörpers 3.

Bei der Montage der Verbindung ist es ferner möglich, die Teile 3, 4, 5 und 26 als zusammengesetzte Einheit auf den oder die Rundkörper 1, 2 aufzuschieben, wobei der Greifring 26, z. B. mittels Federkraft, radial nach aussen vorgespannt ist. Zur Herstellung der Verbindung muss nun lediglich die Ueberwurfmutter 4 angezogen werden.

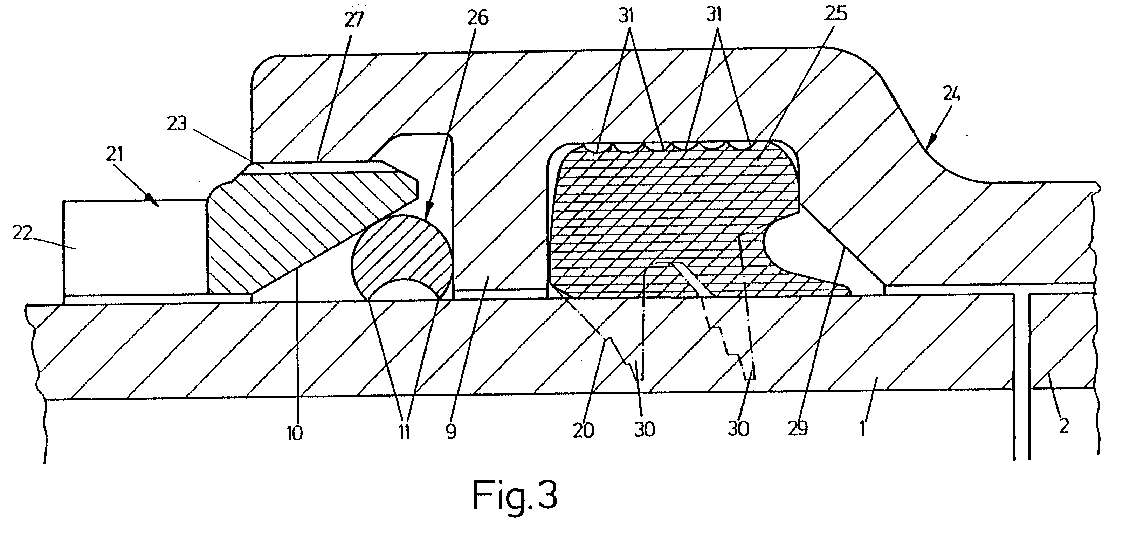

In Fig. 3 ist eine Ausführung dargestellt, bei der der Schraubkörper als ein Ring 21 mit Aussengewinde 23 ausgebildet ist, das in ein Innengewinde 27 am Gewinde-Rohrkörper 24 eingreift. Beim Einschrauben des Ringes 21 in den Gewinde-Rohrkörper 24 wird der Greifring 26, der aussen gegen die kegelstumpfförmige Fläche 10 am Ring 21 anliegt, in die Aussenfläche des Rohres oder Rohrendes 1 eingepresst, wie dies in Verbindung mit Fig. 1 beschrieben wurde.

Damit die Abdichtung verbessert wird, ist die Dichtung 25 am Querschnittsumfang mit einer grossen Anzahl von Einbuchtungen versehen. Beim Einpressen der Dichtung gegen die Aussenfläche der Rohre 1, 2 entstehen dadurch eine grosse Anzahl von Berührungspunkten zwischen der Dichtung und den abzudichtenden Flächen. Infolgedessen wird die Wirkung dieser Dichtung 25 gegenüber derjenigen in Fig. 1 stark erhöht.

Die Querschnittform der Dichtung vor dem Einschieben des Rohres 1 ist durch die Linie 20 dargestellt. Auf der Innenseite weist die Dichtung zwei Zungen 30 auf, die beim Einschieben des Rohres 1 gegen dieses gepresst werden. Damit sich diese Zungen 30 nicht zwischen dem Gewinde-Rohrkörper 24 und dem Rohr 1 verklemmen, läuft die Wand 29 schräg zur Rohrachse, so dass ein Raum zur Aufnahme der Zungen 30 entsteht.

Auf der radial äusseren Fläche der Dichtung 25 sind Rillen 31 vorgesehen, die in der Umfangsrichtung der Dichtung 25 verlaufen.

Der Ring 21 ist am äusseren Ende z. B. kronenförmig ausgebildet, indem regelmässige Vorsprünge 22 durch Einschnitte unterbrochen sind. Zum Anziehen des Ringes 21 wird bei dieser Ausführung ein senkrecht zur Rohrachse ansetzbarer Steckschlüssel verwendet, der mit rechtwinklig daran angesetzten Zapfen versehen ist, die in die Einschnitte zwischen den Vorsprüngen 22 eingreifen. Die Zapfen sind zweckmässig an einer halbkreisförmigen Platte angeordnet, die beim Schrauben an das als Führung dienende Rohr 1 anliegt. Diese Führung erleichtert bzw. beschleunigt das Verbinden der Rohre 1 und 2.

Anstelle der Kronenform kann aber das äussere Ende des Ringes 21 auch andere Formen, z. B. normale Mutterform oder sonstige Formgebung, aufweisen, die eine schnelle Verschraubung gewährleistet.

Die gezeigten Ausführungen sind insbesondere für Rohre, jedoch auch für Stangen verwendbar. Die einzelnen Teile 3 bis 5 bzw. 21, 24, 25, 26 sind in grösseren Stückzahlen relativ preisgünstig herstellbar. Vor allem ist es wichtig, dass keine Gewinde an Rohren oder auch Stangen an der Montagestelle angebracht werden müssen.

**Patentansprüche**

1. Klemmverbindung für glatte Rundkörper (1, 2), insbesondere Rohre oder Stangen, mit einem Gewinde-Rohrkörper (3, 24) und einem Schraubkörper (4, 21), wobei der Schraubkörper (4, 21) eine kegelstumpfförmige Innenfläche (10) und der Gewinde-Rohrkörper (3, 24) einen Anschlag (9) aufweist, zwischen denen ein nicht vollständig geschlossener Greifring (26) angeordnet ist, welcher radial nach innen gegen den Rundkörper (1, 2) verspannbar ist, dadurch gekennzeichnet, dass der Greifring (26) aus Federstahl hergestellt ist und einen kreisförmigen Ausgangs-Querschnitt aufweist, auf dessen radialer Innenseite eine kreisbogenförmige Rille (12) angeordnet ist, durch welche zwei nach innen gerichtete scharfe Kanten (11) gebildet werden, die sich beim Klemmvorgang in die Aussenfläche des Rundkörpers (1, 2) festhaken.

2. Klemmverbindung für Rohre nach Anspruch 1, dadurch gekennzeichnet, dass der Gewinde-Rohrkörper (3) einen sich radial nach innen bis zur Rohrinnenwandung erstreckenden kreisrunden Ansatz (14) aufweist, der als Anschlag für die Rohre (1, 2) dient.

3. Klemmverbindung nach Anspruch 1, dadurch gekennzeichnet, dass eine Dichtung (5, 25) in einer ringförmigen, vom Verschraubungsraum getrennten Ausnehmung auf der Innenfläche des Gewinde-Rohrkörpers (3, 24) angeordnet ist.

4. Klemmverbindung nach Anspruch 3, dadurch gekennzeichnet, dass die Dichtung (5, 25) durch Einschieben des Rundkörpers (1, 2) in die Klemmverbindung zusammenpressbar ist.

5. Klemmverbindung nach Anspruch 1, dadurch gekennzeichnet, dass der Schraubkörper eine Ueberwurfmutter (4) ist, die in ein Aussengewinde (8) am Gewinde-Rohrkörper (3) eingreift (Fig. 1).

6. Klemmverbindung nach Anspruch 1, dadurch gekennzeichnet, dass der Schraubkörper ein Ring (21) mit Aussengewinde (23) ist, das in ein Innengewinde (27) des Gewinde-Rohrkörpers (24) eingreift (Fig. 3).

7. Klemmverbindung nach Anspruch 6, dadurch gekennzeichnet, dass das äussere Ende (22) des Ringes (21) zur Aufnahme eines Steckschlüssels kronenartig ausgebildet ist, für den der Rundkörper (1, 2) als Führung dient.

8. Klemmverbindung nach Anspruch 4, dadurch gekennzeichnet, dass die Dichtung (25) zwei zusammenpressbare, gegen den Rundkörper (1, 2) anliegende Zungen (30) aufweist (Fig. 3).

9. Klemmverbindung nach Anspruch 4 oder 8, dadurch gekennzeichnet, dass die gegen die Innenwandung des Gewinde-Rohrkörpers (24) anliegende Fläche der Dichtung (25) im Axialschnitt wellenförmig (31) verläuft (Fig. 3).

## Claims

1. Clamping connection for smooth round bodies (1, 2), in particular pipes or rods, with a threaded pipe body (3, 24) and a screw body (4, 21), wherein the screw body (4, 21) has a truncated cone-shaped inner surface (10), and the threaded pipe body (3, 24) has a stop (9), between which there is arranged a not completely closed grip ring (26) which can be braced radially inwards against the round body (1, 2), characterised in that the grip ring (26) is made of spring steel and has a circular end cross section, on the radial inner side of which there is arranged a circular groove (12), by which two sharp inwardly directed edges (11) are formed, which bite into the outer surface of the round body (1, 2) during the clamping process.

2. Clamping connection for pipes according to claim 1, characterised in that the threaded pipe body (3) has a circular attachment (14) extending radially inwards to the inner wall of the pipe, which attachment is used as a stop for the pipes (1, 2).

3. Clamping connection according to claim 1, characterised in that a seal (5, 25) is arranged in an annular recess, separated from the screwing area, on the inner surface of the threaded pipe body (3, 24).

4. Clamping connection according to claim 3, characterised in that the seal (5, 25) can be compressed into the coupling joint by insertion of the round body (1, 2).

5. Clamping connection according to claim 1, characterised in that the screw body is a clamping nut (4) which engages onto an outer thread (8) on the threaded pipe body (3) (Fig. 1).

6. Clamping connection according to claim 1, characterised in that the screw body is a ring (21) with an outer thread (23) which engages into an inner thread (27) of the threaded pipe body (24) (Fig. 3).

7. Clamping connection according to claim 6, characterised in that the outer end (22) of the ring (21) for receiving the socket wrench is made to be crown-shaped, for which the round body (1, 2) is used as a guide.

8. Clamping connection according to claim 4, characterised in that the seal (25) has two compressible tongues (30) abutting the round body (1, 2) (Fig. 3).

9. Clamping connection according to claim 4 or 8, characterised in that the surface of the seal (25) abutting the inner wall of the threaded pipe body (24) is wavelike (31) in axial section (Fig. 3).

## Revendications

1. Organe d'assemblage à serrage pour corps ronds lisses (1, 2) notamment pour tubes ou barres, comprenant un corps tubulaire fileté (3, 24) et un corps à visser (4, 21), le corps à visser (4, 21) présentant une surface interne tronconique (10) et le corps tubulaire fileté (3, 24) présentant une butée (9), une bague de blocage (26) qui n'est pas entièrement fermée étant interposée entre cette surface interne et cette butée et pouvant être serrée radialement vers l'intérieur contre le corps rond (1, 2), caractérisé en ce que la bague de blocage (26) est fabriquée en acier à ressorts et présente une section initiale circulaire sur la face radialement intérieure de laquelle est ménagée un sillon (12) en forme d'arc de cercle qui forme deux arêtes vives (11) dirigées vers l'intérieur qui, lors du serrage, mordent dans la surface externe du corps rond (1, 2).

2. Organe d'assemblage à serrage pour tubes selon la revendication 1, caractérisé en ce que le corps tubulaire fileté (3) présente un talon circulaire (14) qui se prolonge radialement vers l'intérieur jusqu'à la surface interne du tube et qui sert de butée pour les tubes (1, 2).

3. Organe d'assemblage à serrage selon la revendication 1, caractérisé en ce qu'une garniture d'étanchéité (5, 25) est disposée dans un évidement annulaire, formé sur la surface interne du corps tubulaire fileté (3, 24) et qui est séparé de l'espace de vissage.

4. Organe d'assemblage à serrage selon la revendication 3, caractérisé en ce que la garniture d'étanchéité (5, 25) peut être comprimée dans l'organe d'assemblage à serrage par l'emmanchement du corps rond (1, 2).

5. Organe d'assemblage à serrage selon la revendication 1, caractérisé en ce que le corps à visser est un écrou de raccord (4) qui se visse dans un filetage extérieur (8) du corps tubulaire fileté (3) (Figure 1).

6. Organe d'assemblage à serrage selon la revendication 1, caractérisé en ce que le corps à visser est une bague (21) munie d'un filetage extérieur (23) qui se visse dans un filetage intérieur (27) du corps tubulaire fileté (24) (Figure 3).

7. Organe d'assemblage à serrage selon la revendication 6, caractérisé en ce que l'extrémité extérieure (22) de la bague (21) est de configuration crénelée pour recevoir une clé à douille, pour laquelle le corps rond (1, 2) sert de guide.

8. Organe d'assemblage à serrage selon la revendication 4, caractérisé en ce que la bague d'étanchéité (25) présente deux lèvres (30) compressibles, qui sont en appui contre le corps rond (1, 2) (Figure 3).

9. Organe d'assemblage à serrage selon la revendication 4 ou la revendication 8, caractérisé en ce que la surface de la garniture d'étanchéité (25) qui est appuyée contre la surface interne du corps tubulaire fileté (24) présente un profil ondulé (31) en coupe axiale (Figure 3).

Fig.1

# Fig. 2

Fig.3

0 073 050